Europäisches Patentamt

(19) European Patent Office

Office européen des brevets

(11) Numéro de publication : **0 278 889 B1**

(12) **FASCICULE DE BREVET EUROPEEN**

(45) Date de publication du fascicule du brevet :
29.05.91 Bulletin 91/22

(51) Int. Cl.⁵ : **B05B 15/12, B01D 45/10**

(21) Numéro de dépôt : **88470001.4**

(22) Date de dépôt : **19.01.88**

(54) **Dispositif de lavage d'un gaz pollué.**

(30) Priorité : **03.02.87 FR 8701387**

(43) Date de publication de la demande :
**17.08.88 Bulletin 88/33**

(45) Mention de la délivrance du brevet :
**29.05.91 Bulletin 91/22**

(84) Etats contractants désignés :
**BE DE ES GB IT SE**

(56) Documents cités :
**FR-A- 1 518 013**
**GB-A- 2 050 187**
**US-A- 4 345 921**
**US-A- 4 515 073**

(73) Titulaire : **AIR INDUSTRIE SYSTEMES**
**124, boulevard de Verdun**
**F-92400 Courbevoie (FR)**

(72) Inventeur : **Cordier, André**
**11, rue du Montoir**
**F-92140 Clamart (FR)**
Inventeur : **Patte, Philippe**
**45, avenue de l'Armée Patton**
**F-54000 Nancy (FR)**

(74) Mandataire : **Puit, Thierry et al**
**Centre de Recherches de Pont-à-Mousson**
**Service de Propriété Industrielle Boîte Postale 109**
**F-54704 Pont-à-Mousson Cédex (FR)**

Jouve, 18, rue Saint-Denis, 75001 PARIS

## Description

L'invention concerne un dispositif de lavage d'un gaz pollué, du type dans lequel le gaz pollué traverse au moins une nappe d'un liquide de lavage.

L'invention concerne plus particulièrement, mais non exclusivement, un dispositif de lavage d'un gaz pollué contenant en suspension des particules solides et/ou liquides qui doivent être éliminées, notamment de fines particules de peinture qui sont présentes dans l'air extrait des cabines de peinture, et, en particulier, les cabines de peinture utilisées dans l'industrie automobile pour peindre les carrosseries.

On connaît déjà un dispositif de lavage d'un gaz pollué qui comporte des parois de ruissellement inclinées l'une vers l'autre, définissant entre elles une ouverture, des moyens pour faire ruisseler un liquide de lavage sur ces parois, et des moyens pour faire circuler de haut en bas le gaz pollué à travers l'ouverture ménagée entre les parois de ruissellement. Le liquide de lavage ruisselle sur les parois inclinées, s'écoule par l'ouverture ménagée entre elles, et forme une nappe liquide que le gaz pollué doit traverser avant d'être rejeté à l'extérieur de la cabine de peinture.

On a proposé dans des installations connues de faire déboucher l'ouverture ménagée entre les parois de ruissellement au-dessus d'une paroi transversale présentant un contour continu, égal ou de préférence plus grand que celui de l'ouverture ménagée entre les parois de ruissellement. Ainsi, le liquide de lavage vient frapper cette paroi transversale où il est dévié avant de tomber dans un bassin de réception situé en-dessous, voir par exemple le document US-A-4 345 921. Grâce à cette paroi transversale, on peut obtenir une nappe continue de liquide de lavage de dimensions déterminées. Toutefois, cette réalisation présente l'inconvénient, lorsque le gaz épuré est extrait latéralement, de provoquer l'entraînement de gouttelettes de liquide de lavage avec le gaz épuré, car le liquide de lavage subit une pulvérisation lorsqu'il vient frapper cette paroi transversale.

Pour éviter cet inconvénient, il a été proposé d'entourer l'ouverture ménagée entre les parois de ruissellement et la paroi transversale par un canal de ruissellement d'axe vertical, ouvert à son extrémité inférieure et s'appuyant sur les parois de ruissellement par son extrémité supérieure.

Mais, pour satisfaire aux nouvelles réglementations en matière de pollution atmosphérique, plus sévères que les anciennes, les dispositifs de lavage, ou laveurs, de l'air extrait des cabines de peinture doivent maintenant fonctionner avec des pertes de charge élevées sur le circuit d'air pour diminuer le rejet à l'atmosphère de particules de peinture non captées par le laveur. Ce sont les particules de peinture de très faibles dimensions (inférieures à 1 micromètre) qui sont les plus difficiles à capter et l'on sait que la captation de celles-ci exige la mise en jeu d'énergie d'autant plus élevée que la taille des particules est plus petite, ce qui se traduit dans un laveur par une perte de charge plus élevée sur le circuit d'air.

Pour satisfaire aux anciennes réglementations, les laveurs utilisés dans les cabines de peinture fonctionnaient avec des pertes de charge comprises entre 80 et 120 mm de colonne d'eau. Dans ces conditions, les laveurs étaient peu bruyants (82 dBA environ), les entraînements de gouttelettes de liquide de lavage limités à des valeurs acceptables et la teneur en particules de peinture dans l'air rejeté à l'atmosphère comprise entre 5 et 10 mg/m3 suivant les types de peintures utilisées, les conditions de mise en oeuvre de la peinture (pistolage manuel, robotisé, pneumatique, électrostatique) et les quantités de peinture projetée.

Lorsque l'on a voulu faire fonctionner les dispositifs de lavage connus, tels que ceux évoqués ci-avant, avec des pertes de charge plus élevées (200 à 300 mm de colonne d'eau) pour satisfaire aux exigences des nouvelles réglementations, c'est-à-dire pour que la teneur en particules de peinture dans l'air extrait des cabines soit égale ou inférieure à 3 mg/m3, par exemple, il s'est avéré que :
- certains laveurs ne fonctionnaient plus correctement lorsqu'une certaine perte de charge, appelée perte de charge critique, était dépassée, et que l'émission de particules de peinture, au lieu de continuer à décroître, augmentait brusquement jusqu'à des valeurs élevées (10 à 20 mg/m3) ;
- certains autres laveurs fonctionnaient correctement, leur efficacité de captation augmentant régulièrement avec la perte de charge mise en jeu, mais laissaient apparaître des défauts incompatibles avec une exploitation industrielle. Ces défauts sont :
  - un bruit intense de fonctionnement, 90 à 95 dBA, nettement au-dessus des normes admises;
  - d'importants entrainements de gouttelettes de liquide de lavage, celles-ci entraînant avec elles des particules de peinture

captées par le liquide de lavage. Il en résulte un dépôt de peinture sur les parois des gaines et des ventilateurs d'extraction de l'air de la cabine, ce qui provoque des nettoyages fréquents nécessitant l'arrêt de l'installation, et des rejets à l'atmosphère de gouttelettes de liquide de lavage chargées de particules de peinture.

Ainsi, malgré la mise en jeu de fortes pertes de charge dans les laveurs, nécessitant une grande dépense d'énergie, un résultat satisfaisant n'est pas obtenu.

Pour éviter ces inconvénients, on a proposé d'adjoindre un second laveur au laveur existant. Celui-ci peut être placé soit en-dessous du premier laveur, soit à l'extérieur de la cabine de pulvérisation de peinture, dans la cheminée d'évacuation de l'air de la cabine. Mais ce laveur additionnel est encombrant et entraîne un investissement supplémentaire pour la construction de la cabine de peinture.

La présente invention a pour objet de fournir un dispositif de lavage de gaz pollué, ou laveur, qui remédie aux inconvénients précités et satisfait aux exigences des nouvelles réglementations concernant les rejets de produits polluants dans l'atmosphère.

A cet effet, l'invention a pour objet un dispositif de lavage d'un gaz pollué, du type dans lequel le gaz pollué traverse au moins une nappe d'un liquide de lavage, comportant des parois de ruissellement délimitant entre elles une ouverture, d1 des moyens pour alimenter en liquide de lavage les parois de ruissellement, des moyens pour faire circuler le gaz pollué de haut en bas, une paroi transversale D1 située au-dessous de ladite ouverture et un canal de ruissellement d'axe vertical, entourant la paroi transversale, délimité par deux parois de confinement fixées de façon étanche par leurs extrémités supérieures sous les parois de ruissellement, de part et d'autre de ladite ouverture et en retrait par rapport aux bords de celle-ci, caractérisé en ce que, à l'intérieur du canal de ruissellement, sous la paroi transversale, sont disposées successivement des parois, fixées par leurs extrémités les plus éloignées l'une de l'autre sur les parois de confinement et dont les autres extrémités délimitent une ouverture, et une paroi transversale située en-dessous de cette dernière ouverture, et en ce que respectivement

– la largeur de la première paroi transversale est supérieure à la largeur de première ouverture ;

– la largeur de la seconde paroi transversale est supérieure à la largeur de deuxième ouverture.

D'autres caractéristiques et avantages ressortiront à la lecture de la description qui va suivre, faite en référence aux dessins annexés, donnés uniquement à titre d'exemple non limitatif, parmi lesquels :

– la Fig. 1 est une vue schématique générale en coupe d'une cabine de peinture équipée d'un dispositif de lavage selon l'invention ;

– la Fig. 2 est une vue en coupe à plus grande échelle du dispositif de lavage équipant la cabine de peinture représentée à la Fig. 1 ;

– la Fig. 3 est une vue en coupe d'une variante de réalisation d'un dispositif de lavage suivant l'invention ;

– la Fig. 4 est une vue en coupe d'une autre variante de réalisation d'un dispositif de lavage suivant l'invention.

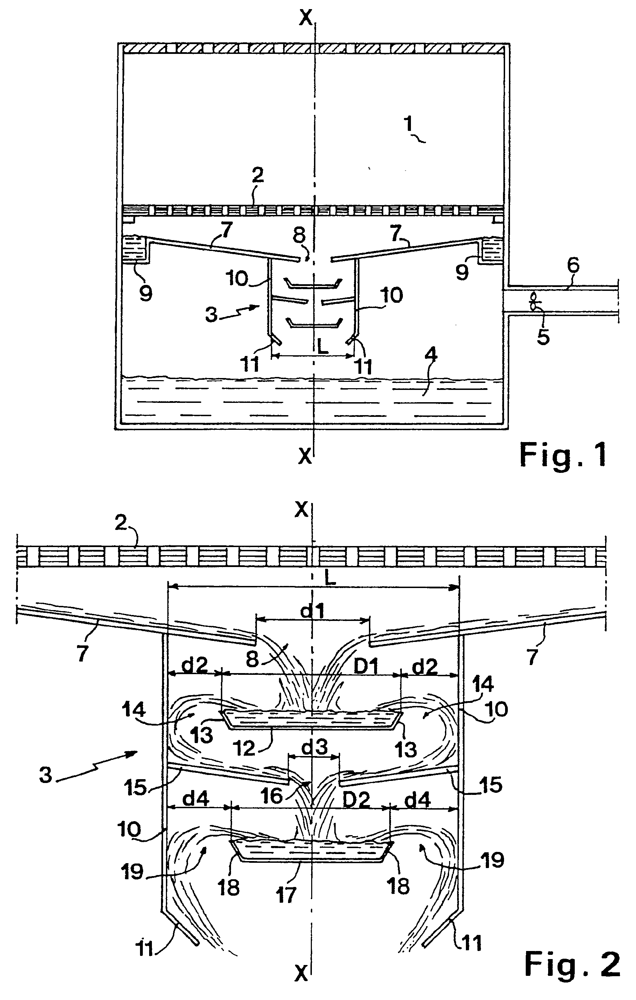

A la figure 1 est représentée une cabine de peinture comprenant une enceinte 1 dans laquelle sont placés les objets à peindre, un plancher ajouré 2, un dispositif de lavage ou laveur 3 selon l'invention, et un bassin de réception 4 du liquide de lavage, placé en-dessous du laveur 3, à la partie inférieure de la cabine de peinture.

Des moyens pour faire circuler le gaz pollué de haut en bas à travers le laveur 3 sont prévus. Ces moyens sont constitués par un ventilateur 5 aspirant le gaz après son passage dans le laveur 3. Ce ventilateur est placé, dans l'exemple de réalisation représenté, dans un conduit 6 ménagé dans l'une des parois latérales de la cabine de peinture, entre le dispositif de lavage 3 et le bassin de réception 4 du liquide de lavage.

Le dispositif de lavage ou laveur 3 (Fig. 1 et 2) comporte successivement, de haut en bas :

– des parois de ruissellement 7, inclinées, convergeant vers le bas en formant un V très ouvert, qui délimitent par leurs extrémités les plus éloignées des parois de la cabine une ouverture 8, de largeur d1, qui s'étend sur toute la longueur de la cabine. Ces parois de ruissellement 7 sont alimentées en liquide de lavage par des goulottes 9 à débordement s'étendant le long des parois latérales de la cabine. Ces goulottes sont elles-mêmes alimentées en liquide de lavage, à partir du bassin de récupération 4, par des moyens de recyclage non représentés sur la figure ;

– des parois de confinement 10, verticales, fixées de façon étanche par leurs extrémités supérieures sous les parois de ruissellement 7 et terminées à leurs extrémités inférieures par des déflecteurs 11 qui convergent vers le bas. Ces parois 10 sont disposées symétriquement de part et d'autre de l'ouverture 8, en retrait par rapport aux bords de cette ouverture, de telle façon que la distance L entre les parois 10 soit supérieure à la largeur d1 de l'ouverture 8. Ces parois 10 délimitent entre elles un canal de ruissellement d'axe vertical X-X ;

– une première paroi transversale 12, horizontale, de largeur D1 supérieure à d1, placée sous l'ouverture 8 et espacée de celle-ci, comportant des bords 13 relevés. La paroi 12 a ainsi la forme d'une cuvette. Cette paroi 12 délimite avec les parois de confinement 10 des ouvertures latérales 14 de largeurs égales à d2. La relation suivante lie les largeurs L, D1, d2 : $L = D1 + 2d2$ ;

– des parois inclinées 15, convergeant vers le bas en formant un V très ouvert dont les extrémités les plus éloignées l'une de l'autre sont fixées de façon étanche sur les parois de confinement 10 et dont les autres extrémités délimitent une ouverture 16, de largeur d3, qui s'étend sur toute la longueur de la cabine;

– une seconde paroi transversale 17 horizontale, de largeur D2 supérieure à d3, placée sous l'ouverture 16 et espacée de celle-ci, comportant des bords 18 relevés. La paroi 17 a ainsi la forme d'une cuvette. Cette paroi 17 délimite avec les parois de confinement 10 des ouvertures latérales 19 de largeurs égales à d4. La relation suivante lie les largeurs L, D2, d4: $L = D2 + 2d4$.

Les parois de confinement 10 peuvent soit se prolonger au dessous du niveau de la seconde paroi transversale 17, soit s'arrêter au niveau de cette paroi 17.

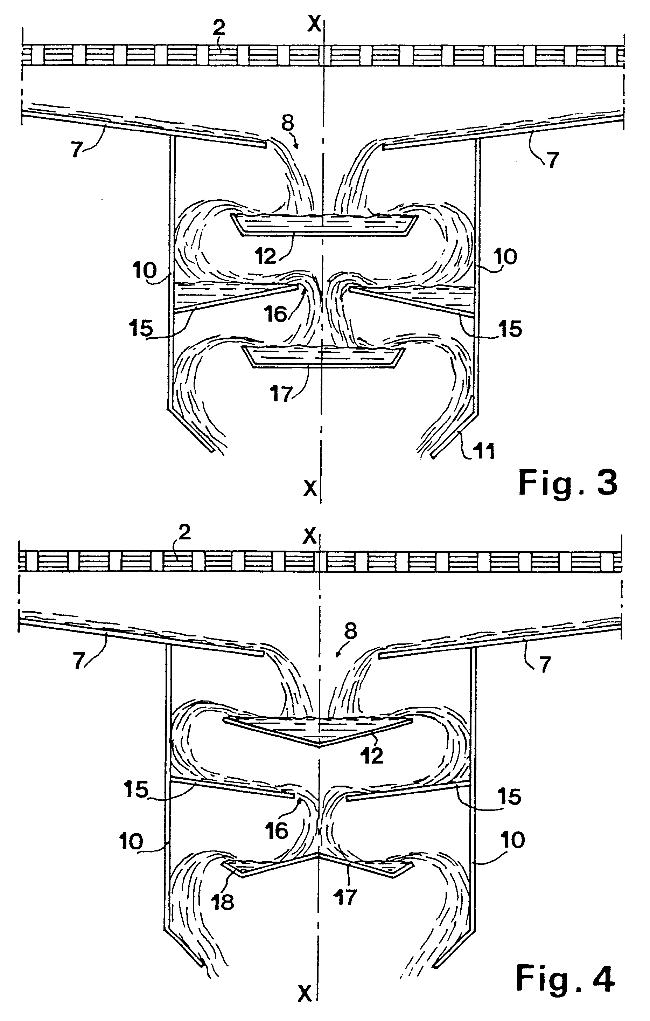

A la figure 3, est représentée une première variante de réalisation du laveur selon l'invention.

Dans cette variante, les parois inclinées 15 sont convergentes vers le haut au lieu d'être convergentes vers le bas, comme dans la réalisation précédemment décrite. Les parois inclinées 15 forment ainsi avec les parois de confinement 10 une réserve de liquide de lavage permettant une distribution correcte de celui-ci dans l'ouverture 16, éliminant ainsi les défauts éventuels d'une mauvaise distribution de liquide de lavage sur les parois de ruissellement 7.

A la figure 4 est représentée une seconde variante de réalisation du laveur selon l'invention. Dans cette variante, on a donné à la paroi transversale 12 la forme d'un V très ouvert dont le sommet est dirigé vers le bas et à la seconde paroi transversale 17 la forme d'un V inversé très ouvert dont le sommet est dirigé vers le haut et dont les extrémités sont munies de bords 18 inclinés qui convergent vers le bas.

En variante encore, les parois de confinement 10, au lieu d'être verticales comme dans les exemples de réalisation décrits ci-avant, peuvent être inclinées par rapport à la verticale et converger vers le bas, leurs extrémités inférieures étant munies de déflecteurs 11, comme décrit précédemment.

Le fonctionnement de ces laveurs est fondé sur le fait que le liquide de lavage ruisselle en premier sur les parois de ruissellement 7, tombe par l'ouverture 8 sur la paroi transversale 12, gagne les parois inclinées 15 par les ouvertures latérales 14, tombe par l'ouverture 16 sur la seconde paroi transversale 17 et s'écoule par les ouvertures latérales 19 avant de gagner l'extrémité inférieure du laveur où il est dévié vers le plan de symétrie vertical du laveur par les déflecteurs 11 et enfin atteint le bassin de réception 4. Au cours de son écoulement du haut vers le bas, le liquide de lavage forme des rideaux liquides successifs. L'air pollué chargé de particules de peinture, en provenance de l'enceinte 1, est aspiré pour être rejeté à l'atmosphère par le ventilateur 5. Au cours de son trajet dans le laveur, il traverse les rideaux liquides successifs créés par l'écoulement du liquide de lavage. Au cours de ces traversées, qui créent des contacts gaz-liquide, l'air pollué est débarrassé de ses particules de peinture qui sont transférées dans le liquide de lavage.

Le dispositif de lavage selon l'invention est agencé de façon telle que :
– l'ouverture 8 a une largeur d1 telle que la vitesse de l'air qui la traverse est comprise entre 10 et 20 m/s ;
– les ouvertures 14, situées de part et d'autre de la première paroi transversale 12, ont une largeur d2 telle que la vitesse de l'air qui les traverse est comprise entre 8 et 15 m/s ;
– l'ouverture 16 a une largeur d3 telle que la vitesse de l'air qui la traverse est comprise entre 10 et 50 m/s. C'est cette ouverture qui crée une perte de charge importante dans le laveur ;
– les ouvertures 19, situées de part et d'autre de la seconde paroi transversale 17 ont une largeur d2 telle que la vitesse de l'air qui les traverse est comprise entre 8 et 15 m/s ;
– la largeur D1 de la paroi transversale 12 est supérieure à la largeur d1 de l'ouverture 8 ;
– la largeur D2 de la seconde paroi transversale 17 est supérieure à la largeur d3 de l'ouverture 16.

Dans un tel dispositif de lavage, les plus grosses particules de peinture présentes dans l'air pollué sont captées lorsque cet air traverse les rideaux de liquide de lavage générés par les ouvertures 8 et 14, tandis que les plus fines particules de peinture sont captées par l'impact à haute vitesse (10 à 50 m/s) de l'air s'écoulant par l'orifice 16 dans le liquide de lavage présent sur la seconde paroi transversale 17.

Les avantages présentés par le dispositif de lavage selon l'invention sont les suivants :
– Bien que conçu pour fonctionner avec une forte perte de charge pouvant atteindre 500 millimètres de colonne d'eau, ce dispositif peut aussi être utilisé à faible perte de charge tout en ayant un rendement de captation identique à celui d'un laveur de l'art antérieur fonctionnant avec la même perte de charge.
– En fonctionnement à forte perte de charge, les entraînements de gouttelettes de liquide de lavage dans l'air rejeté à l'extérieur de l'installation sont considérablement réduits par rapport à ceux que l'on peut constater avec un dispositif de lavage de l'art antérieur fonctionnant lui aussi avec une forte perte de charge identique. Cette diminution notable de l'entraînement de gouttelettes provient du fait que les fines gouttelettes générées par la grande vitesse de passage de l'air dans l'ouverture 16 (10 à 50 m/s) sont captées et coalescées dans les rideaux de liquide de lavage s'écoulant par les ouvertures 19, situées de part et d'autre de la seconde paroi transversale 17. En outre, le liquide de lavage qui a traversé le laveur voit son écoulement vers le bassin de réception 4 resserré par les déflecteurs 11.
– En fonctionnement, le dispositif selon l'invention est nettement moins bruyant qu'un dispositif de l'art antérieur fonctionnant dans les mêmes conditions de perte de charge. Ainsi, des essais comparatifs ont montré que l'intensité sonore émise par le dispositif selon l'invention était de 80 dBA en fonctionnant avec une perte de charge de 120 millimètres de colonne d'eau et de 88 dBA avec 460 mm de colonne d'eau, tandis que, dans les mêmes conditions de fonctionnement, les intensités sonores émises par un laveur de l'art antérieur étaient respectivement de 86 et 96 dBA. L'intensité sonore est divisée par 4 dans le premier cas et par 6 environ dans le second cas.

Comme il va de soi, et comme il résulte d'ailleurs déjà de ce qui précède, l'invention ne se limite nullement à ceux de ses modes d'application qui ont été plus particulièrement envisagés.

## Revendications

1. Dispositif de lavage d'un gaz pollué, du type dans lequel le gaz pollué traverse au moins une nappe d'un liquide de lavage, comportant des parois de ruissellement (7) délimitant entre elles une ouverture (8) de largeur d1, des moyens (9) pour alimenter en liquide de lavage les parois de ruissellement (7), des moyens (5) pour faire circuler le gaz pollué de haut en bas, une paroi transversale (12), de largeur D1, située au-dessous de l'ouverture (8) et un canal de ruissellement d'axe vertical, entourant la paroi transversale (12), délimité par deux parois de confinement (10) fixées de façon étanche par leurs extrémités supérieures sous les parois de ruissellement (7), de part et d'autre de l'ouverture (8) et en retrait par rapport aux bords de cette ouverture, caractérisé en ce que, à l'intérieur du canal de ruissellement, sous la paroi transversale (12), sont disposées successivement des parois (15), fixées par leurs extrémités les plus éloignées l'une de l'autre sur les parois de confinement (10) et dont les autres extrémités délimitent une ouverture (16) de largeur d3, et une paroi transversale (17) de largeur D2, située au-dessous de l'ouverture (16), et que les largeurs D1 et D2 des parois transversales (12) et (17) sont respectivement supérieures aux largeurs d1 et d3 des ouvertures (8) et (16).

2. Dispositif suivant la revendication 1, caractérisé en ce que les parois transversales (12) et (17) comportent des bords relevés, respectivement (13) et (18), dont les extrémités délimitent avec les parois de confinement (10) des ouvertures latérales, respectivement (14) de largeur d2 et (19) de largeur d4.

3. Dispositif suivant les revendications 1 et 2 caractérisé en ce que les parois (15) sont inclinées et convergent vers le bas en formant un V très ouvert.

4. Dispositif suivant les revendications 1 et 2 caractérisé en ce que les parois (15) sont inclinées et convergent vers le haut, formant avec les parois de confinement (10) une réserve de liquide de lavage.

5. Dispositif suivant les revendications 1 et 2 caractérisé en ce que la paroi transversale (12), placée en dessous de l'ouverture (8), a la forme d'un V très ouvert dont le sommet est dirigé vers le bas.

6. Dispositif suivant les revendications 1 et 2 caractérisé en ce que la paroi transversale (17), placée en dessous de l'ouverture (16), a la forme d'un V inversé très ouvert dont le sommet est dirigé vers le haut et dont les extrémités sont munies de bords (18) inclinés gui convergent vers le bas.

7. Dispositif suivant les revendications 1 à 6 caractérisé en ce que les parois de confinement (10) sont verticales et terminées à leur extrémité inférieure par des déflecteurs (11) inclinés qui convergent vers le bas.

8. Dispositif suivant les revendications 1 à 6 caractérisé en ce que les parois de confinement (10) sont inclinées par rapport à la verticale, convergent vers le bas et sont munies à leur extrémité inférieure de déflecteurs (11) inclinés qui convergent, eux aussi, vers le bas.

9. Dispositif suivant l'une quelconque des revendications 1 à 8 caractérisé en ce que la vitesse de passage du gaz dans l'ouverture (8) de largeur d1 est comprise entre 10 et 20 m/s.

10. Dispositif suivant l'une quelconque des revendications 1 à 8 caractérisé en ce que la vitesse de passage du gaz dans les ouvertures (14) de largeur d2 situées de part et d'autre de la paroi transversale (12) est comprise entre 8 et 15 m/s.

11. Dispositif suivant l'une quelconque des revendications 1 à 8 caractérisé en ce que la vitesse de passage du gaz dans l'ouverture (16) de largeur d3 est comprise entre 10 et 50 m/s.

12. Dispositif suivant l'une quelconque des revendications 1 à 8 caractérisé en ce que la vitesse de passage du gaz dans les ouvertures (19) de largeur d4, situées de part et d'autre de la paroi transversale (17), est comprise entre 8 et 15 m/s.

## Ansprüche

1. Einrichtung zum Waschen eines verschmutzten Gases, bei welcher das verschmutzte Gas mindestens einen Waschflüssigkeitsschleier durchströmt, umfassend Berieselungswände (7), die eine Öffnung (8) mit der Breite d1 begrenzen, Vorrichtungen (9), um den Berieselungswänden (7) Waschflüssigkeit zuzuführen, Vorrichtungen (5), um das verschmutzte Gas von oben nach unten zirkulieren zu lassen, eine Querwand (12) mit der Breite D1, die unterhalb der Öffnung (8) angeordnet ist, sowie einen die Querwand (12) umgebenden Berieselungskanal mit vertikaler Achse, der von zwei Einschlußwänden (10) begrenzt ist, welche mit ihren oberen Enden unter den Berieselungswänden (7) auf beiden Seiten der Öffnung (8) und zurückliegend hinsichtlich der Ränder der Öffnung in abdichtender Weise angebracht sind, **dadurch gekennzeichnet**, daß im Inneren des Berieselungskanals unter der Querwand (12) aufeinanderfolgend Wände (15) vorgesehen sind, die mit ihren am weitesten voneinander entfernten Enden an den Einschlußwänden (10) befestigt sind und deren andere Enden eine Öffnung (16) mit der Breite d3 abgrenzen, sowie eine unterhalb der Öffnung (16) angeordnete Querwand (17) mit der Breite D2, und daß die Breiten D1 und D2 der Querwände (12) und (17) größer sind als die Breiten d1 bzw. d3 der Öffnungen (8) und (16).

2. Einrichtung nach Anspruch 1, **dadurch gekennzeichnet**, daß die Querwände (12) und (17) hochgezogene Ränder (13) bzw. (18) aufweisen, deren Enden mit den Einschlußwänden (10) seitliche Öffnungen (14) mit der Breite d2 bzw. (19) mit der Breite d4 abgrenzen.

3. Einrichtung nach den Ansprüchen 1 und 2, **dadurch gekennzeichnet,** daß die Wände (15) geneigt sind und nach unten konvergieren, wobei sie ein sehr offenes V bilden.

4. Einrichtung nach den Ansprüchen 1 und 2, **dadurch gekennzeichnet,** daß die Wände (15) geneigt sind und nach oben konvergieren, wobei sie mit den Einschlußwänden (10) eine Waschflüssigkeitsreserve bilden.

5. Einrichtung nach den Ansprüchen 1 und 2, **dadurch gekennzeichnet,** daß die unterhalb der Öffnung (8) angeordnete Querwand (12) die Form eines sehr offenen V aufweist, dessen Spitze nach unten gerichtet ist.

6. Einrichtung nach den Ansprüchen 1 und 2, **dadurch gekennzeichnet,** daß die unterhalb der Öffnung (16) angeordnete Querwand (17) die Form eines umgekehrten, sehr offenen V aufweist, dessen Spitze nach oben gerichtet ist und dessen Enden mit geneigten Rändern (18) versehen sind, die nach unten konvergieren.

7. Einrichtung nach den Ansprüchen 1 bis 6, **dadurch gekennzeichnet,** daß die Einschlußwände (10) vertikal sind und an ihren unteren Enden von geneigten Ablenkplatten (11) begrenzt sind, welche nach unten konvergieren.

8. Einrichtung nach den Ansprüchen 1 bis 6, **dadurch gekennzeichnet,** daß die Einschlußwände (10) bezüglich der Senkrechten geneigt sind, nach unten konvergieren und an ihren unteren Enden mit geneigten Ablenkplatten (11) versehen sind, die ebenfalls nach unten konvergieren.

9. Einrichtung nach einem der Ansprüche 1 bis 8, **dadurch gekennzeichnet,** daß die Geschwindigkeit des Gasdurchflusses in der Öffnung (8) mit der Breite d1 zwischen 10 und 20 m/s beträgt.

10. Einrichtung nach einem der Ansprüche 1 bis 8, **dadurch gekennzeichnet,** daß die Geschwindigkeit des Gasdurchflusses in den auf beiden Seiten der Querwand (12) angeordneten Öffnungen (14) mit der Breite d2 zwischen 8 und 15 m/s beträgt.

11. Einrichtung nach einem der Ansprüche 1 bis 8, **dadurch gekennzeichnet,** daß die Geschwindigkeit des Gasdurchflusses in der Öffnung (16) mit der Breite d3 zwischen 10 und 50 m/s beträgt.

12. Einrichtung nach einem der Ansprüche 1 bis 8, **dadurch gekennzeichnet,** daß die Geschwindigkeit des Gasdurchflusses in den auf beiden Seiten der Querwand (17) angeordneten Öffnungen (19) mit der Breite d4 zwischen 8 und 15 m/s beträgt.

## Claims

1. Device for scrubbing a polluted gas, of the type in which the polluted gas passes through at least one sheet of a scrubbing liquid, comprising trickling walls (7) defining therebetween an opening (8) of width d1, means (9) for supplying the trickling walls (7) with scrubbing liquid, means (5) for circulating the polluted gas in a downwards direction, a transverse wall (12) of width D1, situated below the opening (8) and a trickling channel having a vertical axis, surrounding the transverse wall (12), defined by two confining walls (10) fixed in a liquid-tight manner by their upper ends below the trickling walls (7), on either side of the opening (8) and set back with respect to the edges of this opening, characterised in that disposed in succession within the trickling channel, below the transverse wall (12) are walls (15), fixed by their ends which are furthest from each other, to the confining walls (10) and whereof the other ends define an opening (16) of width d3, and a transverse wall (17) of width D2, situated below the opening (16) and that the widths D1 and D2 of the transverse walls(12) and (17) are respectively greater than the widths d1 and d3 of the openings (8) and (16).

2. Device according to Claim 1, characterised in that the transverse walls (12) and (17) comprise raised edges, respectively (13) and (18), whereof the ends define with the confining walls (10), lateral openings, respectively (14) of width d2 and (19) of width d4.

3. Device according to Claims 1 and 2, characterised in that the walls (15) are inclined and converge in a downwards direction forming a very open V.

4. Device according to Claims 1 and 2, characterised in that the walls (15) are inclined and converge in an upwards direction, forming a reserve of scrubbing liquid with the confining walls (10).

5. Device according to Claims 1 and 2, characterised in that the transverse wall (12), placed below the opening (8), is in the shape of a very open V, the apex of which is directed downwards.

6. Device according to Claims 1 and 2, characterised in that the transverse wall (17), located below the opening (16), is in the shape of a very open, inverted V, whereof the apex is directed upwards and whereof the ends are provided with inclined edges (18) which converge in a downwards direction.

7. Device according to Claims 1 to 6, characterised in that the confining walls (10) are vertical and terminated at their lower end by inclined deflectors (11), which converge in a downwards direction.

8. Device according to Claims 1 to 6, characterised in that the confining walls (10) are inclined with respect to the vertical, converge in a downwards direction and are provided at their lower end with inclined deflectors (11), which themselves also converge in a downwards direction.

9. Device according to one of Claims 1 to 8, characterised in that the speed of passage of the gas into the opening (8) of width d1 is between 10 and 20 m/sec.

10. Device according to one of Claims 1 to 8, characterised in that the speed of passage of the gas into the openings (14) of width d2 situated on either side of the transverse wall (12) is between 8 and 15 m/sec.

11. Device according to one of Claims 1 to 8, characterised in that the speed of passage of the gas into the opening (16) of width d3 is between 10 and 50 m/sec.

12. Device according to one of Claims 1 to 8, characterised in that the speed of passage of the gas into the openings (19) of width d4, situated on either side of the transverse wall (17), is between 8 and 15 m/sec.

Fig. 1

Fig. 2

EP 0 278 889 B1

Fig. 3

Fig. 4

9